# FASCICULE DE BREVET EUROPEEN

(11) **EP 0 982 100 B1**
(45) Date de publication et mention de la délivrance du brevet: **22.10.2003**
(21) Numéro de dépôt: 99402066.7
(22) Date de dépôt: 16.08.1999
(51) Int. Cl.: B25B 5/16, B25B 5/12, F16D 1/08

(54) **Dispositif de calage par serrage d'une pièce sur un arbre non cylindrique**
Vorrichtung zum Festsetzen mittels Festspannen eines Teils auf einer nicht-zylindrischen Welle
Device for fixing a piece on a non-cylindrical shaft by clamping

(30) Priorité: 21.08.1998 FR 9810608
(43) Date de publication de la demande: 01.03.2000
(73) Titulaire: Breiter, Martin, F-75020 Paris (FR); Mifsud, Gilles, F-77163 Morcef (FR)
(72) Inventeur: Breiter, Martin, F-75020 Paris (FR); Mifsud, Gilles, F-77163 Morcef (FR)
(74) Mandataire: Chambon, Gérard

(56) Documents cités:
- EP-A- 0 596 808
- EP-A- 0 758 575
- DE-C- 139 247
- DE-U- 29 504 267
- FR-A- 2 296 494
- 'Relinghållare - komplett eller fotsats', Janvier 1997, THULE, SWEDEN

## Description

L'invention concerne un dispositif de calage par serrage d'une pièce sur un arbre non cylindrique.

Une tête de bridage encore plus simplement appelé "serrage" comporte au moins un bras de serrage monté pivotant entre au moins une position de serrage et une position de desserrage comme décrit par exemple dans le brevet EP 0 596 808 au nom des mêmes inventeurs.

Le bras de serrage est fixé sur un arbre tournant et son positionnement doit être d'une grande précision afin de venir serrer une pièce entre l'une des extrémités dudit bras et un organe opposé.

Pour fixer le bras de serrage sur l'arbre, on a prévu par exemple un cerclage serré, ce qui n'est possible que si l'on peut enfiler ledit bras sur l'arbre et, il a donc aussi été imaginé de fixer ledit bras sur un arbre non cylindrique et plus particulièrement polygonale, au moyen d'une bride de serrage, ladite bride étant généralement fixée par deux vis.

Or il est parfois nécessaire de changer le bras ou de le récupérer car celui-ci est personnalisé selon la pièce à serrer et les dispositifs connus peuvent paraître peu pratiques et/ou longs à mettre en oeuvre, tandis que les endroits de manipulation ne sont pas toujours d'un accès aisé, et que souvent au lieu d'avoir un bras de serrage, on utilise un étrier dont chaque aile est alors fixée par une bride d'où la manipulation de quatre vis.

En outre, il est clair que le positionnement des bras ou étriers de serrage doit être parfait pour venir dans une position relative précise avec l'organe opposé de serrage.

C'est notamment pourquoi les inventeurs ont recherché et conçu un dispositif de calage facile à monter et à démonter et qui reste précis et notamment, qui ne varie plus en fonction d'un ordre de serrage des vis et/ou en fonction des couples de serrage.

A cette fin le dispositif selon l'invention pour caler par serrage une pièce sur un arbre non cylindrique est notamment remarquable en ce qu'il comporte au moins une bride qui est pourvue, au voisinage de sa partie centrale d'une empreinte de forme conjuguée de celle d'une partie du profil dudit arbre, d'un côté de ladite empreinte d'une vis de serrage destinée à venir en prise avec un taraudage conjugué ménagé dans ladite pièce, et de l'autre côté de l'empreinte d'un talon destiné à venir s'accrocher sur un épaulement correspondant de la pièce, cette dernière étant elle-même pourvue d'une empreinte correspondant à une autre partie du profil de l'arbre, de telle sorte qu'un desserrage partiel de la vis permet à la bride de pivoter latéralement autour de ladite vis servant d'axe de pivotement, tandis qu'un serrage de la vis, après accrochage du talon sur l'épaulement de la pièce permet de positionner et caler la pièce sur l'arbre.

Avantageusement, la vis est du type imperdable à desserrage partiel.

Selon un mode de réalisation pour une pièce à caler munie d'au moins deux ailes, on utilise deux brides prévues pour coopérer avec les deux ailes de la pièce et munies chacune d'une empreinte correspondant à une partie du profil de l'arbre.

A titre d'application, la pièce à caler est un étrier constituant l'un des éléments de serrage d'une tête de bridage, ledit étrier étant calé sur l'arbre de pivotement de la tête de bridage par deux brides pivotantes coopérant avec les deux ailes dudit étrier, mais il est clair que l'invention peut convenir à toutes sortes d'autres applications.

L'invention sera bien comprise à la lecture de la description qui va suivre et qui se réfère aux dessins annexés dans lesquels:
- la figure 1 est une perspective d'une tête de bridage dont l'étrier est fixé par des dispositifs selon l'invention,
- les figures 2 et 3 montrent en vue de profil et en position respectivement serrée et desserrée l'étrier de la figure 1 muni des dispositifs selon l'invention.

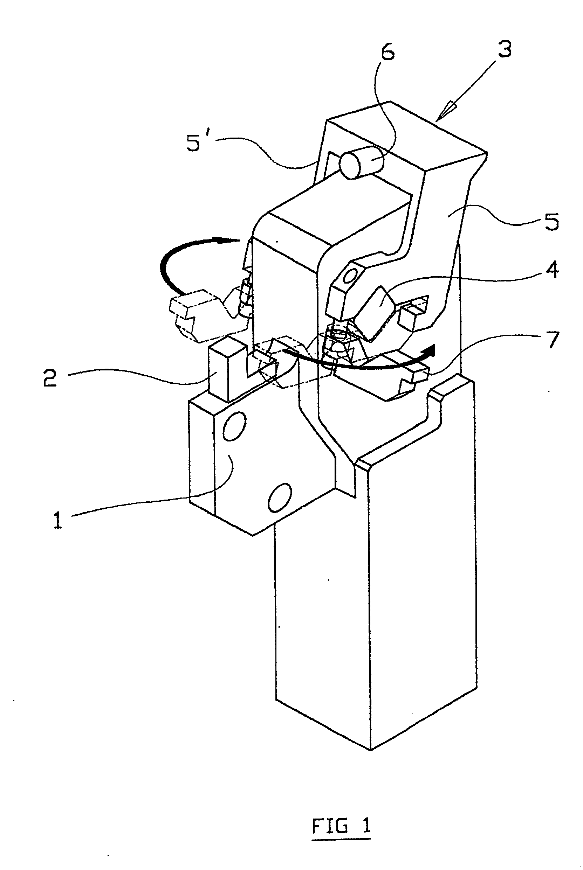

La figure 1 montre une tête de bridage munie notamment d'une plaque 1 de fixation sur un support, ladite plaque étant munie d'une butée 2 dont il sera question ci-après, et d'un étrier 3 de serrage monté sur un arbre rotatif 4 de section polygonale (ici sensiblement carrée).

L'étrier 3, destiné à recevoir un mors de serrage (non représenté), pivote grâce à la rotation de l'arbre 4 mû par divers moyens mécaniques et pneumatiques non décrits plus spécialement ici.

Comme le montre bien la figure 1, l'étrier 3 présente deux ailes 5, 5' calées sur l'arbre 4 et ici une butée 6 destinée à constituer avec la butée 2 des butées de référence et/ou de réglage pour l'étrier 3 et/ou le mors précité dont il est équipé.

Chaque aile 5, 5' de l'étrier 3 est calée sur l'arbre 4 au moyen d'une bride pivotante telle que 7 sur les figures.

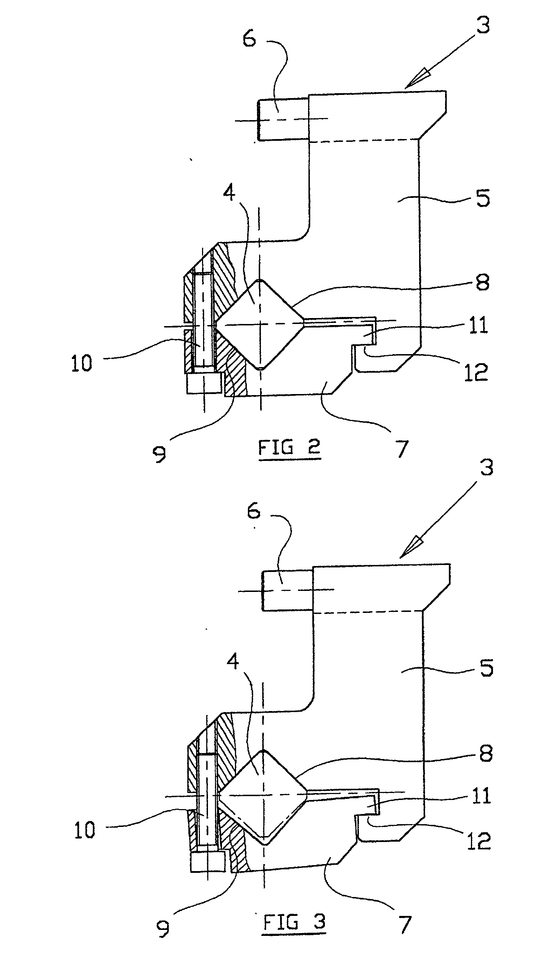

Comme on peut le voir plus précisément sur les figures 2 et 3, l'aile 5 de l'étrier 3 ( comme l'aile 5' de l'autre côté bien entendu) présente une empreinte 8 de forme correspondant sensiblement à presqu'une demi-périphérie de l'arbre 4 (ici donc sensiblement la forme d'un demi-carré rentrant).

La bride 7 comporte également une empreinte 9 correspondant sensiblement à l'autre demi-périphérie de l'arbre 4.

Par ailleurs, l'une des extrémités de la bride 7 est assujettie à l'aile 5 par une vis 10 de type par exemple imperdable tandis que l'autre extrémité de la bride 7 est pourvue d'un talon 11 destiné à venir s'accrocher sur un épaulement 12 approprié de ladite aile 5, la vis 10 et le talon 11 étant donc disposés de part et d'autre de l'empreinte 9 de ladite bride 7.

L'utilisation est particulièrement simple à comprendre.

Pour monter l'étrier sur l'arbre 4, il suffit que les vis 10 soient desserrées de telle sorte que chaque bride 7 peut pivoter autour d'une vis 10 servant d'axe de pivotement, pour prendre par exemple la position représentée en trait plein sur la figure 1 ou encore prendre la position dirigée vers l'avant comme représentée en trait mixte sur ladite figure 1.

Après mise en place des ailes 5, 5' sur l'arbre 4 grâce aux empreintes telles que 8 dont elles sont munies, il suffit de faire pivoter lesdites brides vers l'arrière (selon les flèches représentées sur la figure 1) jusqu'à ce que, pour chaque bride, son talon 11 vienne au-dessus de l'épaulement 12 de l'aile correspondante 5, 5' comme le montre bien la figure 3.

Ensuite, un serrage de la vis 10, comme représenté sur la figure 2, entraînera un calage approprié qui équilibrera les couples et répartira automatiquement les jeux.

Le démontage s'effectuera bien entendu, par les opérations inverses.

On comprend que l'invention est particulièrement bien adaptée pour un étrier dont le positionnement à cheval sur la tête de bridage est difficile, mais il est clair qu'il pourrait s'agir d'un simple bras sous la forme par exemple de l'une des ailes de l'étrier.

Il est clair aussi, comme déjà dit, que l'invention n'est pas limitée à l'application pour une tête de bridage mais pour tout calage d'une pièce sur un axe surtout lorsque la pièce ne peut pas être en partie enfilée sur ledit arbre.

## Revendications

1. Dispositif de calage par serrage d'une pièce (5) à l'extrémité d'un arbre (4) non cylindrique et comportant au moins une bride (7) qui est pourvue, au voisinage de sa partie centrale d'une empreinte (9) de forme conjuguée de celle d'une partie du profil dudit arbre (4), et d'un côté de ladite empreinte d'une vis de serrage (10) tandis que ladite pièce est elle-même pourvue d'une empreinte (8) correspondant à une autre partie du profil de l'arbre, **caractérisé en ce que** la vis de serrage (10) est destinée à venir en prise avec un taraudage conjugué ménagé dans ladite pièce (5) et que de l'autre côté de l'empreinte par rapport à ladite vis, la bride est pourvue d'un talon (11) destiné à venir sur un épaulement (12) correspondant de la pièce, de telle sorte qu'un desserrage partiel de la vis (10) permet à la bride (7) de pivoter latéralement autour de ladite vis servant d'axe de pivotement pour s'engager sur l'arbre (4) ou s'en dégager, tandis qu'un serrage de la vis, après application du talon (11) sur l'épaulement (12) de la pièce permet de positionner et caler la pièce (5) sur l'arbre (4).

2. Dispositif selon la revendication 1, ***caractérisé* en ce que** la vis (10) est du type imperdable à desserrage partiel.

3. Dispositif selon l'une des revendications 1 et 2 pour une pièce (3) à caler munie d'au moins deux ailes (5, 5'), ***caractérisé* en ce qu'**il comporte deux brides (7) prévues pour coopérer avec les deux ailes (5, 5') de la pièce et munies chacune d'une empreinte (8) correspondant à une partie du profil de l'arbre (4).

4. Dispositif selon la revendication 3, ***caractérisé* en ce que** la pièce à caler est un étrier (3) constituant l'un des éléments de serrage d'une tête de bridage, ledit étrier (3) étant calé sur l'arbre (4) de pivotement de la tête de bridage par deux brides (7) pivotantes coopérant avec les deux ailes (5, 5') dudit étrier (3).

## Patentansprüche

1. Vorrichtung zum Festsetzen durch Festspannen eines Teils (5) am Ende einer nicht-zylindrischen Welle (4), umfassend wenigstens eine Spannbacke (7), die nahe ihres Mittenbereichs mit einer Aufnahme (9) mit einer einem Abschnitt des Profils der Welle (4) zugeordneten Form und auf einer Seite der Aufnahme mit einer Spannschraube (10) versehen ist, während das Teil selbst mit einer Aufnahme (8) versehen ist, die einem anderen Abschnitt des Wellenprofils entspricht, **dadurch gekennzeichnet, daß** die Spannschraube (10) dazu bestimmt ist, mit einem entsprechenden, im Teil (5) angebrachten Innengewinde in Eingriff zu kommen und daß die Spannbacke auf der bezüglich der Schraube anderen Seite der Aufnahme mit einer Nase (11) versehen ist, die bis auf eine entsprechende Schulter (12) des Teils reichen soll, so daß ein teilweises Lösen der Schraube (10) ein seitliches Schwenken der Spannbacke (7) um die als Schwenkachse dienende Schraube gestattet, um sie auf die Welle (4) aufzulegen oder von ihr abzunehmen, während es das Anziehen der Schraube nach Auflegen der Nase (11) auf die Schulter (12) des Teils gestattet, das Teil (5) auf der Welle (4) zu positionieren und festzusetzen.

2. Vorrichtung nach Anspruch 1, **dadurch gekennzeichnet, daß** die Schraube (10) bei teilweisem Lösen unverlierbar

3. Vorrichtung nach einem der Ansprüche 1 oder 2 für ein mit wenigstens zwei Schenkeln (5, 5') versehenes fixierbares Teil (3), **dadurch gekennzeichnet, daß** es zwei Spannbacken (7) umfaßt, die für das Zusammenwirken mit den beiden Schenkeln (5, 5') des Teils vorgesehen sind, und von denen jede mit einer einem Abschnitt des Profils der Welle (4) entsprechenden Aufnahme (8) versehen ist.

4. Vorrichtung nach Anspruch 3, **dadurch gekennzeichnet, daß** das fixierbare Teil ein Bügel (3) ist, der eines der Spannelemente eines Spannkopfs bildet, wobei der Bügel (3) auf der Schwenkwelle (4) des Spannkopfs mittels zweier schwenkbarer Spannbacken (7) festgesetzt ist, die mit den beiden Schenkeln (5, 5') des Bügels (3) zusammenwirken.

## Claims

1. Device for fixing a part (5) to the end of a non-cylindrical shaft (4) by clamping and comprising at least one clamp (7) which, in the vicinity of its central portion, is provided with a hollow (9) with a shape matching that of a portion of the profile of said shaft (4) and, on one side of said hollow, with a clamping screw (10), whereas said part is itself provided with a hollow (8) corresponding to another portion of the profile of the shaft, **characterised in that** the clamping screw (10) is designed to engage with a matching tapping formed in said part (5), and **in that** on the other side of the hollow in relation to said screw, the clamp is provided with a lug (11) designed to bear on a corresponding shoulder (12) of the part such that partial loosening of the screw (10) allows the clamp (7) to pivot laterally about said screw serving as pivoting axis to engage over the shaft (4) or disengage therefrom, whereas tightening of the screw, after application of the lug (11) on the shoulder (12) of the part allows the part (5) to be positioned and fixed on the shaft (4).

2. Device according to claim 1, **characterised in that** the screw (10) is of the captive type which is loosened partially.

3. Device according to one of claims 1 and 2 for a part (3) to be fixed provided with at least two limbs (5, 5'), **characterised in that** it comprises two clamps (7) designed to cooperate with the two limbs (5, 5') of the part and each provided with a hollow (8) corresponding to a portion of the profile of the shaft (4).

4. Device according to claim 3, **characterised in that** the part to be fixed is a stirrup (3) constituting one of the clamping elements of a clamping head, said stirrup (3) being fixed on the pivot shaft (4) of the clamping head by two pivoting clamps (7) cooperating with the two limbs (5, 5') of said stirrup (3).
